# EUROPÄISCHE PATENTANMELDUNG

(11) **EP 1 221 584 A1**
(43) Veröffentlichungstag der Anmeldung: **10.07.2002**
(21) Anmeldenummer: 01100490.0
(22) Anmeldetag: 09.01.2001
(51) Int. Cl.: G01B 11/27, G01B 21/24, G01M 17/00, G01S 7/40

(54) **Verfahren und Vorrichtung zum Ausrichten eines Fahrzeugs bezüglich seiner Geradeauslaufrichtung**

(71) Anmelder: VisiCon Automatisierungstechnik GmbH, 37130 Gleichen-Wöllmarshausen (DE)
(72) Erfinder: Schrammen, Peter, 34253 Lohfelden (DE)
(74) Vertreter: Patentanwälte Rehberg + Hüppe

(57) **Zusammenfassung**

Zur Ausrichtung eines Fahrzeugs (2) mit einer ungelenkten Achse (4) und einer gelenkten Achse (7) bezüglich der Geradeauslaufrichtung des Fahrzeugs (2) wird mindestens ein Rad (3) der ungelenkten Achse (4) des Fahrzeugs (2) auf einer horizontal ausgerichteten Lauffläche (5) angeordnet und das Fahrzeug (2) im Bereich seiner gelenkten Achse (7) gegenüber linearen Bewegungen festgehalten. Dan wird die Lauffläche (5) nur in einer festen horizontalen Richtung (10) von der gelenkten Achse (7) weg unter dem sich frei drehenden Rad (3) verschoben, oder das Rad (3) wird in einer Drehrichtung angetrieben, die einer Bewegung des Fahrzeugs (2) in einer Richtung von seiner ungelenkten Achse (4) zu seiner gelenkten Achse (7) entspricht, wobei die Lauffläche (5) von dem sich drehenden Rad (3) nur in der festen horizontalen Richtung (10) verschiebbar ist.

## Beschreibung

Die Erfindung bezieht sich auf ein Verfahren zum Ausrichten eines Fahrzeugs mit einer ungelenkten Achse und einer gelenkten Achse bezüglich der Geradeauslaufrichtung des Fahrzeugs. Weiterhin bezieht sich die Erfindung auf eine Vorrichtung zur Durchführung eines solchen Verfahrens.

Das Ausrichten eines Fahrzeugs bezüglich seiner Geradeauslaufrichtung muß beispielsweise dann erfolgen, wenn das Ausrichten der Scheinwerfer des Fahrzeugs eingestellt oder überprüft werden soll. Bei der Einstellung der Scheinwerfer eines Fahrzeugs handelt es sich um eine Winkeleinstellung, wobei die Strahlrichtung der Scheinwerfer horizontal und vertikal eingestellt wird. Die ideale Bezugsachse für die horizontale Einstellung ist die Geradeauslaufrichtung des Fahrzeugs, wobei es sich um die eine Fahrtrichtung des Fahrzeugs handelt, bei der es sich geradlinig bewegt, d. h., bei der die Lenkung neutral ist.

Auch Abstandsradarsensoren, die den Abstand eines Fahrzeugs zu einem voranfahrenden Fahrzeug erfassen sollen, müssen wie Scheinwerfer horizontal und vertikal eingestellt werden, wobei wieder die Geradeauslaufrichtung des Fahrzeugs die ideale Bezugsachse für die horizontale Einstellung ist.

Da die Geradeauslaufrichtung eines Fahrzeugs aber bislang bei stehendem Fahrzeug nicht ohne weiteres feststellbar ist, wird für das Ausrichten des Fahrzeugs bezüglich seiner Geradeauslaufrichtung häufig auf das Ausrichten des Fahrzeugs bezüglich seiner horizontalen Fahrzeuglängsachse zurückgegriffen, die theoretisch, d.h. ohne das Auftreten eines sogenannten Hundegangs mit der Geradeauslaufrichtung des Fahrzeugs zusammenfällt.

Bei einem bekannten Verfahren zum Ausrichten eines Fahrzeugs bezüglich seiner horizontalen Fahrzeuglängsachse wird das Fahrzeug mit seinen vier Rädern auf vier in Querrichtung leicht beweglichen Platten, sogenannten Schiebeplatten, oder auf vier Rollensätzen positioniert. Mit Hilfe von vier mechanischen Schiebern wird das Fahrzeug symmetrisch und mit gleicher Kraft entweder über die Reifeninnenseiten oder die Reifenaußenseiten aller vier Räder oder über vier in der Nähe von Vorder- bzw. Hinterachse gelegene Bereiche der Karosserie, bei denen es sich in der Regel um die Stoßfänger handelt, ausgerichtet, so daß die horizontale Fahrzeuglängsachse parallel zur Symmetrieachse der Ausrichteinheit verläuft. Zum Ausrichten des Fahrzeugs bezüglich seiner Geradeauslaufrichtung sind dabei die Varianten vorzuziehen, bei denen die Schieber an den Reifen angreifen.

Bei einem bekannten Verfahren zum Ermitteln der Lage der horizontalen Fahrzeuglängsachse eines Fahrzeugs wird mit Hilfe von geeigneten, beispielsweise optischen oder akustischen Sensoren, an jeweils zwei Positionen auf jeder Seite des Fahrzeugs der Abstand zwischen dem Fahrzeug und einem ortsfesten Bezugspunkt bestimmt. Bei geeigneter Anordnung der Sensoren kann daraus die Ausrichtung der horizontalen Fahrzeuglängsachse relativ zur Symmetrieachse der Meßeinrichtung ermittelt werden.

Die beiden bis hierher beschriebenen Verfahren sind zwangsläufig mit Fehlern bei der Ausrichtung des Fahrzeugs bezüglich seiner Geradeauslaufrichtung behaftet, weil statt der Geradeauslaufrichtung nur die horizontale Fahrzeuglängsachse betrachtet wird. Darüberhinaus ist ein erheblicher apparativer Aufwand zur Durchführung der bekannten Verfahren erforderlich, insbesondere wenn die Fahrzeuglängsachse relativ genau bestimmt werden soll. Im Bereich großer Genauigkeiten macht sich aber auch eine Abweichung der Fahrzeuglängsachse von der Geradeauslaufrichtung des Fahrzeugs besonders stark bemerkbar.

Der Erfindung liegt die Aufgabe zugrunde, ein Verfahren und eine Vorrichtung zum Ausrichten eines Fahrzeugs mit einer ungelenkten Achse und einer gelenkten Achse bezüglich der Geradeauslaufrichtung des Fahrzeugs aufzuzeigen, bei denen tatsächlich die Geradeauslaufrichtung des Fahrzeugs berücksichtigt wird, obwohl das Ausrichten am stehenden Fahrzeug erfolgt und der hierfür notwendige apparative Aufwand begrenzt ist.

Erfindungsgemäß wird diese Aufgabe bei dem Verfahren einmal dadurch gelöst, daß mindestens ein Rad der ungelenkten Achse des Fahrzeugs auf einer horizontal ausgerichteten Lauffläche angeordnet wird, daß das Fahrzeug im Bereich seiner gelenkten Achse gegenüber linearen Bewegungen festgehalten wird und daß die Lauffläche nur in einer festen horizontalen Richtung, d.h. einer einzigen linearen Richtung, von der gelenkten Achse weg unter dem sich frei drehenden Rad verschoben wird.

Diese Ausführung des neuen Verfahren ist unabhängig davon nutzbar, ob die Räder der ungelenkten Achse des Fahrzeugs angetrieben sind oder nicht. Durch die sich von der ungelenkten Achse weg bewegende Lauffläche wird eine Bewegung des Fahrzeugs in Richtung von der ungelenkten Achse zur gelenkten Achse, d.h. in der Regel eine Vorwärtsfahrt, simuliert. Dabei treten seitliche Kräfte auf die Räder der ungelenkten Achse des Fahrzeugs auf, wenn die feste horizontale Richtung der Bewegung der Lauffläche nicht mit der Geradeauslaufrichtung des Fahrzeugs, die durch seine ungelenkte Achse festgelegt wird, zusammenfällt. Diese Kräfte verdrehen das Fahrzeug so um seinen Festhaltepunkt im Bereich der gelenkten Achse, daß sie das Fahrzeug nach kurzem Rollweg der Räder auf der Lauffläche so ausrichten, daß seine Geradeauslaufrichtung mit der festen horizontalen Richtung der Bewegung der Lauffläche zusammenfällt.

Dieses Ergebnis wird auch bei einem Verfahren der eingangs beschriebenen Art erreicht, das dadurch gekennzeichnet ist, daß mindestens ein Rad der ungelenkten Achse des Fahrzeugs auf einer horizontal ausgerichteten Lauffläche angeordnet wird, daß das Fahrzeug im Bereich seiner gelenkten Achse gegenüber linearen Bewegungen festgehalten wird, und daß das Rad in einer Drehrichtung angetrieben wird, die einer Bewegung des Fahrzeugs in einer Richtung von seiner ungelenkten Achse zu seiner gelenkten Achse entspricht, wobei die Lauffläche von dem sich drehenden Rad nur in einer festen horizontalen Richtung, d.h. einer einzigen linearen Richtung, verschiebbar ist.

Die Unterschiede der beiden Verfahrensvarianten liegen darin, daß die zweite Variante nur bei Fahrzeugen durchführbar ist, bei denen die Räder der ungelenkten Achse des Fahrzeugs antreibbar sind, so daß sie den Antrieb der Lauffläche übernehmen können. Die Drehrichtung der Räder der ungelenkten Achse entspricht aber bei beiden Verfahrensvarianten einer Fahrtrichtung von der ungelenkten Achse zur gelenkten Achse, d. h. einer Vorwärtsfahrt, und das Ausrichten des Fahrzeugs mit seiner Geradeauslaufrichtung zu der festen horizontalen Richtung der Lauffläche erfolgt nach demselben Prinzip.

Die Ursache für die auftretenden seitlichen Kräfte, die das Fahrzeug ausrichten, bis seine Geradeauslaufrichtung mit der festen horizontalen Richtung der Lauffläche übereinstimmt, kann neben den geometrischen Verhältnissen auch durch das Minimum der Reibung zwischen der Lauffläche und den darauf angeordneten Rädern des Fahrzeugs erklärt werden, das sich bei Übereinstimmung der festen horizontalen Richtung der Lauffläche und der Geradeauslaufrichtung des Fahrzeugs einstellt.

Es versteht sich, daß idealerweise alle Räder der ungelenkten Achse auf der Lauffläche angeordnet werden. Sofern nur ein Teil der Räder, beispielsweise nur eines, der ungelenkten Achse auf der Lauffläche angeordnet werden, berücksichtigt das neue Verfahren in beiden Varianten nur deren Geradeauslaufrichtung als Geradeauslaufrichtung des Fahrzeugs, obwohl hier keine Übereinstimmung vorliegen muß.

Zum Festhalten des Fahrzeugs im Bereich seiner gelenkten Achse kann jedes Rad der gelenkten Achse gegen Wegrollen gesichert werden. Dies ist einfach realisierbar, wenn die Räder der gelenkten Achse separat gebremst werden können, beispielsweise durch Einlegen eines Ganges bei einem Fahrzeug, bei dem nur die Räder der gelenkten Achse angetrieben werden. Ein Festlegen der Räder der gelenkten Achse kann aber auch durch einfache äußere mechanische Maßnahmen erreicht werden. Es ist auch denkbar, nur ein einziges von mehreren Rädern der gelenkten Achse zum Festhalten des Fahrzeugs gegen Wegrollen zu sichern. Dies ist aber nur dann sinnvoll, wenn auch nur das direkt dahinter liegende Rad der ungelenkten Achse auf der Lauffläche angeordnet wird, weil sonst durch auftretende Dreh- und Rollwiderstände hervorgerufene Kräfte auf ein seitlich versetztes Rad der ungelenkten Spur ein Drehmoment um das gegen Wegrollen gesicherte Rad der gelenkten Achse erzeugen, das zu einem anderen Gleichgewichtszustand des Fahrzeugs auf der sich fortbewegenden Lauffläche und damit zu einem Fehler beim Ausrichten des Fahrzeugs bezüglich seiner Geradeauslaufrichtung führt.

Wenn jedes Rad der gelenkten Achse dadurch gegen Wegrollen gesichert wird, daß bei einem im Bereich seiner gelenkten Achse angetriebenen Fahrzeug ein Gang eingelegt wird, wird durch das vorhandene Differential des Fahrzeugs eine vertikale Drehachse für das Fahrzeug im Bereich des Mittelpunkts seiner gelenkten Achse definiert. Hierdurch neutralisieren sich etwaige Drehmomente aufgrund der Dreh- und Rollwiderstände der Räder auf der Lauffläche. Es ist natürlich möglich, eine solche vertikale Drehachse für das Fahrzeug im Bereich des Mittelpunkts seiner gelenkten Achse auch anderweitig zu definieren, beispielsweise durch einen gemeinsamen Drehteller für alle Räder der gelenkten Achse des Fahrzeugs.

Mit beiden Varianten des neuen Verfahrens wird sichergestellt, daß die Geradeauslaufrichtung des Fahrzeugs mit der horizontalen Richtung der Lauffläche zusammenfällt. Die seitliche Ausrichtung des Fahrzeugs parallel zu diesen Richtungen kann dadurch ermittelt werden, daß der Abstand jedes Rads der gelenkten Achse zu einer vertikalen Referenzebene bestimmt wird, die in der festen horizontalen Richtung der Lauffläche verläuft.

Bei einer Vorrichtung der eingangs beschriebenen Art wird die erfindungsgemäße Aufgabe durch eine horizontal ausgerichtete Lauffläche gelöst, auf der mindestens ein Rad der ungelenkten Achse des Fahrzeugs anordbar ist und die nur in einer festen horizontalen Richtung verschiebbar ist. Dabei kann die Lauffläche passiv durch die darauf angeordneten Räder des Fahrzeugs verschiebbar sein oder einen eigenen Antrieb zum aktiven Verschieben aufweisen. Wenn ein solcher Antrieb vorhanden ist, ist hiermit die Lauffläche in der festen horizontalen Richtung von der gelenkten Achse weg zu dem sich frei drehenden Rad verschiebbar.

Die Lauffläche kann durch die Oberseite eines Förderbands oder aber durch die Oberseite von einer oder mehreren parallel zueinander angeordneten Rollen ausgebildet sein. Dabei muß das Förderband bzw. müssen die Rollen nicht durchgängig für alle Räder der ungelenkten Achse ausgebildet sein. Es reicht aus, wenn eine Parallelität der Richtungen der einzelnen Teillaufflächen sichergestellt ist.

Wenn die Vorrichtung eine Querrinne für die Räder der gelenkten Achse des Fahrzeugs aufweist, sind hierdurch Mittel ausgebildet, die das Fahrzeug im Bereich seiner gelenkten Achse gegenüber linearen Bewegungen festhalten.

Wenn darüberhinaus in der Querrinne eine Abstandsmeßeinrichtung angeordnet ist, mit der die Abstände der Räder der gelenkten Achse in der Querrinne an einem Referenzpunkt in der Rinne erfaßbar sind, kann auch die Position des Fahrzeugs in Querrichtung erfaßt werden. In Verbindung mit dem erfindungsgemäßen Ausrichten des Fahrzeugs bezüglich seiner Geradeauslaufrichtung ist die Orientierung des Fahrzeugs dann vollständig ermittelt, und es ist problemlos möglich, beispielsweise eine Einrichtung zum Erfassen und Kontrollieren der Einstellung der Scheinwerfer des Fahrzeugs korrekt vor den Scheinwerfern zu positionieren.

Die Erfindung wird im folgenden anhand eines Ausführungsbeispiels näher erläutert und beschrieben. Dabei zeigt
- Fig. 1: ein Fahrzeug auf der neuen Vorrichtung in einer Seitenansicht,
- Fig. 2: die neue Vorrichtung in einer Ansicht von oben,
- Fig. 3: ein Detail der Vorrichtung gemäß den Fig. 1 und 2 und
- Fig. 4: in Verbindung mit Fig. 5 das Wirkprinzip der neuen Vorrichtung.

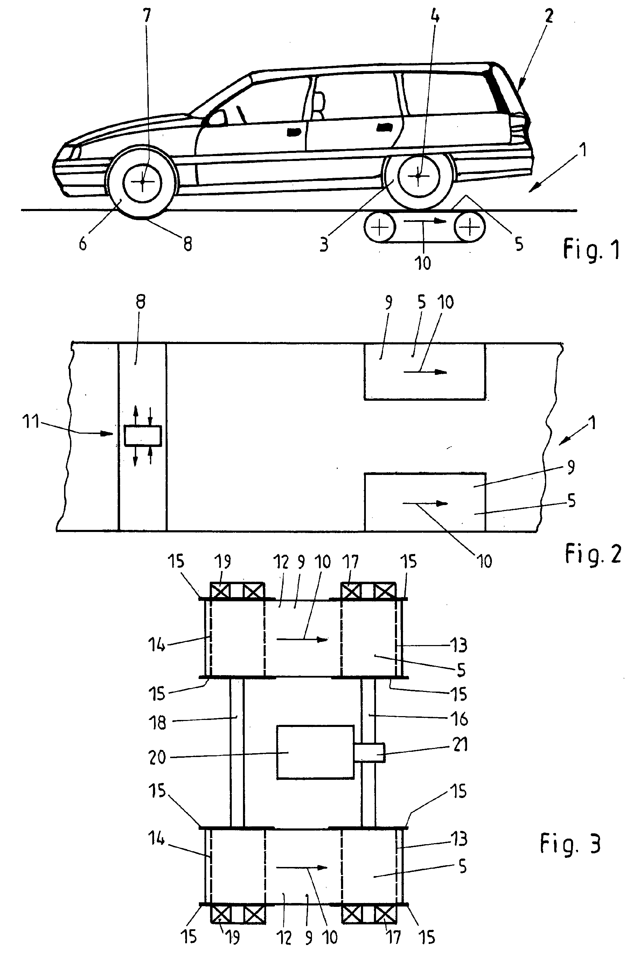

Die in den Figuren 1 und 2 dargestellte Vorrichtung 1 dient zum Ausrichten eines Fahrzeugs 2 bezüglich seiner Geradeauslaufrichtung. Die Geradeauslaufrichtung des Fahrzeugs 2 wird durch die Orientierung der Räder 3 seiner ungelenkten Achse 4 festgelegt, bei der es sich hier in üblicher Weise um die Hinterachse des Fahrzeugs handelt. Die Räder 3 der ungelenkten Achse 4 sind bei der Vorrichtung 1 auf einer Lauffläche 5 angeordnet. Demgegenüber sind die Räder 6 der gelenkten Achse 7 des Fahrzeugs in einer Querrinne 8 gegen Wegrollen gesichert, so daß das Fahrzeug 2 im Bereich seiner gelenkten Achse 7 gegenüber linearen Bewegungen festgehalten ist. Die Lauffläche 5, die von der Oberseite eines in Querrichtung unterteilten Förderbands 9 ausgebildet wird, wird in einer festen horizontalen Richtung 10 nach hinten bewegt. Allein dadurch richtet sich das Fahrzeug 2 automatisch so aus, daß seine Geradeauslaufrichtung mit der Richtung 10 zusammenfällt. Zur Ermittlung der seitlichen Lage des Fahrzeugs 2 in Querrichtung ist in der Querrinne 8 eine Abstandsmeßeinrichtung 11 vorgesehen, die beispielsweise optisch den Abstand der Räder 6 der gelenkten Achse 7 zu einem Referenzpunkt in der Querrinne erfaßt.

Fig. 3 zeigt im Detail die Ausbildung des Förderbands 9 zur Bereitstellung der Lauffläche 5. Das Förderband 9 weist zwei Teilbänder 12 auf, die jeweils auf einer angetriebenen Rolle 13 und einer freilaufenden Rolle 14 angeordnet sind. Dabei sind an den Rollen 13 und 14 seitliche Führungen 15 für die Teilbänder vorgesehen. Die beiden angetriebenen Rollen 13 sind drehfest auf einer gemeinsamen Welle 16 gelagert, die in ihren Endbereichen in ortsfesten Drehlagern 17 drehbar gelagert ist. Entsprechend sind die Rollen 14 drehfest auf einer gemeinsamen Welle 18 gelagert, die in ihren Endbereichen in ortsfesten Drehlagern 19 drehbar gelagert ist. Soweit die Wellen 16 und 18 parallel zueinander ausgerichtet sind und die Rollen 13 und 14 jeweils zentrisch auf den Wellen 16 und 18 sitzen, kann davon ausgegangen werden, daß sich die die Lauffläche 5 ausbildenden Oberseiten der Teilbänder 12 parallel zueinander in der Richtung 10 bewegen, wenn die Welle 16 von einem Motor 20 mit nachgeschaltetem Getriebe 21 angetrieben wird. Wenn dieser Antrieb erfolgt oder auch wenn die Teilbänder 9 in der Richtung 10 passiv durch die Räder 3 der ungelenkten Achse 4 des Fahrzeugs angetrieben werden, erfolgt das Ausrichten des Fahrzeugs 2 bezüglich seiner Geradeauslaufrichtung auf die Richtung 10 über eine Lauf länge der Lauffläche 5 von wenigen Metern.

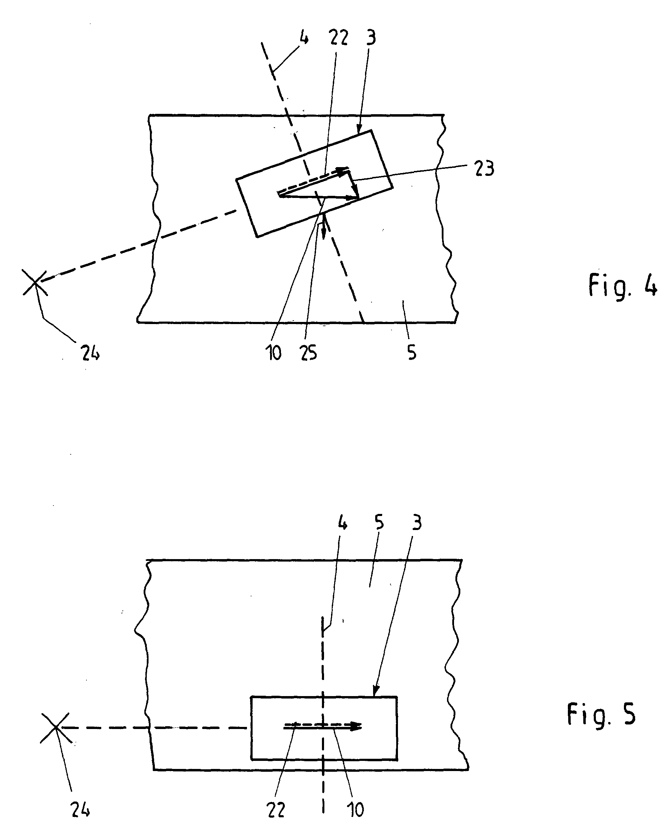

Warum das automatische Ausrichten des Fahrzeugs 2 auf der Vorrichtung 1 erfolgt, ist anhand der Fig. 4 und 5 leicht nachvollziehbar. In Fig. 4 ist die ungelenkte Achse 4 mit dem Rad 3 bezüglich der Lauffläche 5 noch nicht so ausgerichtet, daß die Geradeauslaufrichtung der Achse 4 der Richtung 10 entspricht. Das heißt, die Aufstandfläche des auf der Lauffläche 5 abrollenden Rads 3 weist nicht nur eine Bewegungskomponente 22 in tangentialer Richtung um die ungelenkte Achse 4 sondern auch eine Bewegungskomponente 23 in Richtung der ungelenkten Achse 4 aus. Da gleichzeitig das Fahrzeug durch die Sicherung der Räder 6 seiner ungelenkten Achse 7 gegen Wegrollen (vgl. Fig. 1) nicht parallel zu der ungelenkten Achse 4 verschiebbar sondern nur um eine vorne liegende vertikale Drehachse 24 verdrehbar ist, richtet sich das Rad 3 in Richtung des Schwenkpfeils 25 aus, bis die in Fig. 5 gezeigte Stellung erreicht ist, in der die Bewegungskomponente 22 mit der Richtung 10 zusammenfällt. Dabei ist es nicht entscheidend, daß die vertikale Drehachse 24 entgegen der Richtung 10 genau vor dem Rad 3 liegt. Ohne die Dreh- und Rollreibung des Rads 3 auf der Lauffläche 5 wäre ein seitlicher Versatz der Drehachse 24 sogar völlig unbeachtlich. Aufgrund der in der Praxis immer auftretenden Dreh- und Rollreibung ergeben sich aber Querkräfte auf das Rad 3, wenn die Drehachse 24 nicht bei einem Rad 3 vor diesem Rad liegt oder bei mehreren Rädern 3 in der Längsmittelebene des Fahrzeugs 2 verläuft, so daß sich die Querkräfte auf die einzelnen Räder 3 gegenseitig aufheben.

In der Praxis stellt sich heraus, daß das Fahrzeug 2 binnen kürzester Zeit, d. h. nach kurzer Lauf länge der Lauffläche 5 von nur wenigen Metern reproduzierbar eine bestimmte Winkellage zu der Vorrichtung 1 einnimmt und auch bei laufendem Förderband 9 kaum wieder aus dieser Relativlage heraus bringbar ist, weil die Spurstabilität der ungelenkten Achse 4 dieser erneuten Auslenkung entgegensteht.

Es ist völlig problemlos, eine Ausrichtgenauigkeit des Fahrzeugs 2 bezüglich seiner Geradeauslaufrichtung zu der Richtung 10 von maximal 0,1 %, d. h. ein 1 mm Abweichung auf 1 m Fahrzeuglänge einzuhalten. Hierfür muß nur eine entsprechend genaue Führung der Lauffläche 5 in der Richtung 10 sichergestellt werden. Von einer etwaigen Spur der ungelenkten Achse, sei sie positiv oder auch negativ, ist das neue Vorgehen beim Ausrichten des Fahrzeugs zu seiner Geradeauslaufrichtung in keiner Weise abhängig.

### BEZUGSZEICHENLISTE

- 1 -: Vorrichtung
- 2 -: Fahrzeug
- 3 -: Rad
- 4 -: ungelenkte Achse
- 5 -: Lauffläche
- 6 -: Rad
- 7 -: gelenkte Achse
- 8 -: Querrinne
- 9 -: Förderband
- 10 -: Richtung

- 11 -: Abstandsmeßeinrichtung
- 12 -: Teilband
- 13 -: Rolle
- 14 -: Rolle
- 15 -: Führung
- 16 -: Welle
- 17 -: Drehlager
- 18 -: Welle
- 19 -: Drehlager
- 20 -: Motor

- 21 -: Getriebe
- 22 -: Richtungskomponente
- 23 -: Richtungskomponente
- 24 -: Drehachse
- 25 -: Schwenkpfeil

## Patentansprüche

1. Verfahren zur Ausrichtung eines Fahrzeugs mit einer ungelenkten Achse und einer gelenkten Achse bezüglich der Geradeauslaufrichtung des Fahrzeugs, **dadurch gekennzeichnet, daß** mindestens ein Rad (3) der ungelenkten Achse (4) des Fahrzeugs (2) auf einer horizontal ausgerichteten Lauffläche (5) angeordnet wird, daß das Fahrzeug (2) im Bereich seiner gelenkten Achse (7) gegenüber linearen Bewegungen festgehalten wird und daß die Lauffläche (5) nur in einer festen horizontalen Richtung (10) von der gelenkten Achse (7) weg unter dem sich frei drehenden Rad (3) verschoben wird.

2. Verfahren zur Ausrichtung eines Fahrzeugs mit einer ungelenkten Achse und einer gelenkten Achse bezüglich der Geradeauslaufrichtung des Fahrzeugs, **dadurch gekennzeichnet, daß** mindestens ein Rad (3) der ungelenkten Achse (4) des Fahrzeugs (2) auf einer horizontal ausgerichteten Lauffläche (5) angeordnet wird, daß das Fahrzeug (2) im Bereich seiner gelenkten Achse (7) gegenüber linearen Bewegungen festgehalten wird und daß das Rad (3) in einer Drehrichtung angetrieben wird, die einer Bewegung des Fahrzeugs (2) in einer Richtung von seiner ungelenkten Achse (4) zu seiner gelenkten Achse (7) entspricht, wobei die Lauffläche (5) von dem sich drehenden Rad (3) nur in einer festen horizontalen Richtung (10) verschiebbar ist.

3. Verfahren nach Anspruch 1 oder 2, **dadurch gekennzeichnet, daß** alle Räder (3) der ungelenkten Achse auf der Lauffläche (5) angeordnet werden.

4. Verfahren nach Anspruch 1, 2 oder 3, **dadurch gekennzeichnet, daß** zum Festhalten des Fahrzeugs (2) im Bereich seiner gelenkten Achse (7) jedes Rad (6) der gelenkten Achse (7) gegen Wegrollen gesichert wird.

5. Verfahren nach einem der Ansprüche 1 bis 4, **dadurch gekennzeichnet, daß** beim Festhalten des Fahrzeugs (2) im Bereich seiner gelenkten Achse (7) eine vertikale Drehachse (24) für das Fahrzeug (2) im Bereich des Mittelpunkts seiner gelenkten Achse (7) definiert wird.

6. Verfahren nach einem der Ansprüche 1 bis 4, **dadurch gekennzeichnet, daß** der Abstand jedes Rads (6) der gelenkten Achse (7) zu einer vertikalen Referenzebene bestimmt wird, die in der festen horizontalen Richtung der (10) Lauffläche (5) verläuft.

7. Vorrichtung zur Ausrichtung eines Fahrzeugs mit einer ungelenkten Achse und einer gelenkten Achse bezüglich der Geradeauslaufrichtung des Fahrzeugs, **gekennzeichnet durch** eine horizontal ausgerichteten Lauffläche (5), auf der mindestens ein Rad (3) der ungelenkten Achse (4) des Fahrzeugs (2) anordbar ist und die nur in einer festen horizontalen Richtung (10) verschiebbar ist.

8. Vorrichtung nach Anspruch 7, **gekennzeichnet durch** einen Antrieb (20, 21) für die Lauffläche (5), mit dem die Lauffläche (5) in der festen horizontalen Richtung von der gelenkten Achse (7) weg zu dem sich frei drehenden Rad (3) verschiebbar ist.

9. Vorrichtung nach Anspruch 7 oder 8, **gekennzeichnet durch** ein Förderband (9), das mit seiner Oberseite die Lauffläche (5) ausgebildet.

10. Vorrichtung nach einem der Ansprüche 7 bis 9, **gekennzeichnet durch** eine Querrinne (8) für die Räder (6) der gelenkten Achse (7) des Fahrzeugs (2), wobei in der Querrinne (8) eine Abstandsmeßeinrichtung (11) angeordnet ist, mit der die Abstände der Räder (6) der gelenkten Achse (7) in der Querrinne zu einem Referenzpunkt in der Querrinne (8) erfaßbar sind.
